# EUROPÄISCHE PATENTANMELDUNG

(11) **EP 4 553 725 A1**
(43) Veröffentlichungstag der Anmeldung: **14.05.2025**
(21) Anmeldenummer: 23209145.4
(22) Anmeldetag: 10.11.2023
(51) Int. Cl.: G06Q 10/0631

(54) **VERFAHREN ZUR RECHNERGESTÜTZTEN ERZEUGUNG EINES DATENGETRIEBENEN MODELLS FÜR DIE RECHNERGESTÜTZTE VERARBEITUNG DIGITALER DATEN EINES MATERIALFLUSSSYSTEMS UND VORRICHTUNG**

(71) Anmelder: Siemens Digital Logistics GmbH, 67227 Frankenthal (DE)
(72) Erfinder: Gaerttner, Johannes, 76199 Karlsruhe (DE); Haager, Dominik, 83052 Bruckmühl (DE); Isinger, Theodor, 68199 Mannheim (DE); Wolfrum, Philipp, 81539 München (DE)
(74) Vertreter: Siemens Patent Attorneys

(57) **Zusammenfassung**

Die Erfindung beschreibt ein Verfahren zur rechnergestützten Erzeugung eines datengetriebenen Modells (MO) für die rechnergestützte Verarbeitung digitaler Daten eines Materialflusssystems (MFS) für die zeitliche und/oder quantitative Steuerung eines technischen Systems (TS) mittels eines Produktionsplans (PP). Zur Erzeugung des Produktionsplans (PP) werden von zumindest einem Lieferanten (L1, L2, L3) eines direkten Lieferantennetzwerks (LN) Bereitstellungsinformationen verarbeitet. Die Erzeugung des datengetriebenen Modells umfasst in einem Schritt i) das Bereitstellen eines Trainingsdatensatzes (TDS), der für eine Vielzahl an Lieferungen der Vergangenheit jeweils zumindest eine Soll-Bereitstellungsinformation (SLD, SLM), zumindest eine Ist-Bereitstellungsinformation (ILD, ILM) und zumindest ein Ereignis (EVT), das eine Abweichung der Ist-Bereitstellungsinformation (ILD, ILM) von der Soll-Bereitstellungsinformationen (SLD, SLM) bewirkt oder bewirken kann, umfasst. In einem Schritt ii) erfolgt das Trainieren eines Maschinenlernverfahrens (ML) mit dem Trainingsdatensatz (TDS), wobei das Maschinenlernverfahren (ML) einen Eingang zum Einlesen zumindest einer in der Zukunft geplanten Soll-Bereitstellungsinformation (SLD, SLM) und zumindest eines Ereignisses (EVT) vor oder im Bereich des Soll-Lieferzeitpunkts umfasst, und einen Ausgang zum Ausgeben erwarteter Bereitstellungsinformationen (ELD, ELM) als die Bereitstellungsinformationen umfasst, wobei das trainierte Maschinenlernverfahren (ML) das erzeugte datengetriebene Modell (MO) darstellt.

## Beschreibung

Die Erfindung betrifft ein Verfahren und eine Vorrichtung zur rechnergestützten Erzeugung eines datengetriebenen Modells für die rechnergestützte Verarbeitung digitaler Daten eines Materialflusssystems für die zeitliche und/oder quantitative Steuerung eines technischen Systems mittels eines Produktionsplans.

Bei Materialflusssystemen, z.B. für Produktions- oder Logistiksysteme, existiert das Bestreben, Daten zügiger und automatisiert auszutauschen. In der Regel sind jedoch nicht alle in einem Materialflusssystem beteiligten Partner, z.B. Lieferanten, in der Lage, Daten untereinander auszutauschen. Dadurch fehlen Eingangsdaten über Vorgänge in einer Lieferkette oder sind nicht in ausreichender Qualität vorhanden. Dies führt zu Qualitätsverlusten und reduzierter Aussagekraft von in einem technischen System eingesetzten Applikationen und Komponenten im Hinblick auf eine Materialflusssimulation, Produktionsplanung oder Auftragsmanagement.

Um eine Materialflusssimulation, eine Produktionsplanung oder ein Auftragsmanagement für ein technisches System durchführen zu können, wurde in der Vergangenheit auf Plandaten zurückgegriffen. Fehlende Daten wurden in der Regel manuell bei einem Lieferanten in der Lieferkette angefragt und in einem eigenen System erfasst. Ein häufig auftretendes Problem waren unzuverlässige Angaben oder für die Weiterverarbeitung nicht geeignete (Zeitraum-)Angaben. Teilweise konnten die Systeme dadurch auch lediglich mit veralteten Daten betrieben werden. Bei vollständig fehlenden Daten einzelner Partner musste mit Datenlücken umgegangen werden.

Es ist Aufgabe der Erfindung, ein Verfahren und eine Vorrichtung anzugeben, welche den Betrieb eines Materialflusssystems mit präziseren und lückenlosen Daten ermöglicht, um eine zeitliche und/oder quantitative Steuerung des technischen Systems ermöglichen zu können.

Diese Aufgabe wird gelöst durch ein Verfahren gemäß den Merkmalen des Patentanspruches 1, eine Vorrichtung gemäß den Merkmalen des Anspruches 8, ein technisches System gemäß den Merkmalen des Anspruches 10 und ein Computerprogrammprodukt gemäß den Merkmalen des Anspruches 11. Vorteilhafte Ausgestaltungen ergeben sich aus den abhängigen Ansprüchen.

Es wird ein Verfahren zur rechnergestützten Erzeugung eines datengetriebenen Modells für die rechnergestützte Verarbeitung digitaler Daten eines Materialflusssystems für die zeitliche und/oder quantitative Steuerung eines technischen Systems mittels eines Produktionsplans vorgeschlagen. Unter einem technischen System im Sinne der vorliegenden Erfindung wird insbesondere eine Produktionsanlage oder ein Logistiksystem oder eine Kombination davon verstanden. Der Begriff "mittels eines Produktionsplans" ist in der Weise zu verstehen, dass das technische System durch die Erzeugung eines Produktionsplans in geeigneter Weise gesteuert werden kann.

Das technische System umfasst zumindest eine steuerbare Produktionseinheit und/oder zumindest eine steuerbare Logistikeinheit. Eine Produktionseinheit kann eine beliebige Maschine oder ein Maschinensystem sein, welches zur mechanischen, elektrischen oder chemischen Bearbeitung eines Gutes/Halbzeugs/Produkts oder zu dessen Zusammenbau ausgebildet ist. Eine steuerbare Logistikeinheit umfasst beispielsweise ein automatisiertes Lagersystem, Transportroboter, und dergleichen.

Zur Erzeugung des Produktionsplans werden von zumindest einem Lieferanten eines direkten Lieferantennetzwerks Bereitstellungsinformationen verarbeitet. Die Bereitstellungsinformationen umfassen zumindest einen Soll-Lieferzeitpunkt. Ein Lieferant im Sinne der vorliegenden Beschreibung ist insbesondere ein Produktionsbetrieb oder ein Logistikpartner, der ein mittels des technischen Systems zu verarbeitendes Stückgut oder Halbzeug herstellt oder anliefert.

Die Erzeugung des datengetriebenen Modells umfasst die folgenden Schritte:
In einem Schritt i) erfolgt das Bereitstellen eines Trainingsdatensatzes, der für eine Vielzahl an Lieferungen oder Aufträge der Vergangenheit jeweils zumindest eine Soll-Bereitstellungsinformation, zumindest eine Ist-Bereitstellungsinformation und zumindest ein Ereignis, das eine Abweichung der Ist-Bereitstellungsinformation von der Soll-Bereitstellungsinformation bewirkt oder bewirken kann, umfasst. Der Trainingsdatensatz kann insbesondere aus historischen Lieferdaten des betreffenden Lieferanten bestehen. Für jede Lieferung sind die von dem Lieferanten angegebenen Soll-Bereitstellungsinformationen sowie die tatsächlichen Ist-Bereitstellungsinformationen bekannt. Ebenso können aus den jeweiligen Zeitpunkten Ereignisse ermittelt werden, welche beispielsweise einen Wochentag, ein Kalenderereignis (Feiertag, Ferienzeit/keine Ferienzeit), Wetterbedingung, Wetterereignis (Regen, Flut, Sturm), Pandemie, Verkehrssituation (Stau, Zug-/Flugausfall, Verzögerung eines Schiffstransports, usw.) umfassen. Das oder die Ereignisse werden als ausschlaggebend für eine eventuelle Abweichung einer Ist-Bereitstellungsinformation von einer entsprechenden Soll-Bereitstellungsinformation angenommen.

In einem Schritt ii) erfolgt das Trainieren eines Maschinenlernverfahrens mit dem Trainingsdatensatz, wobei das Maschinenlernverfahren einen Eingang zum Einlesen zumindest einer in der Zukunft geplanten Soll-Bereitstellungsinformation und zumindest eines Ereignisses vor oder im Bereich des Soll-Lieferzeitpunktes umfasst, und einen Ausgang zum Ausgeben erwarteter Bereitstellungsinformationen als die Bereitstellungsinformationen umfasst, wobei das Maschinenlernverfahren das erzeugte datengetriebene Modell darstellt.

Das trainierte datengetriebene Modell kann insbesondere auf einem Offline-Lernverfahren oder den bekannten Semi-Supervised Offline Learning-Methoden basieren. Bei diesen kann auf besonders effiziente Weise aus historischen Daten das Maschinenlernverfahren angelernt werden, um aus einer Soll-Bereitstellungsinformation die tatsächlich erwartete Bereitstellungsinformation zu bestimmen.

Durch das erfindungsgemäße Verfahren wird ein einfaches und effizientes Verfahren bereitgestellt, um aus historischen Daten für zukünftig erwartete Lieferungen eine präzise erwartete Bereitstellungsinformation erzeugen zu können, die dann die Grundlage für die Erzeugung eines Produktionsplans zur zeitlichen und/oder quantitativen Steuerung des technischen Systems bildet.

In einer zweckmäßigen Ausgestaltung umfasst die Soll-Bereitstellungsinformation einen geplanten Lieferzeitpunkt und/oder eine geplante Liefermenge einer Ware bzw. eines Vorprodukts. Unter der Liefermenge ist insbesondere eine geplante Stückzahl zu verstehen.

In entsprechender Weise umfasst die Ist-Bereitstellungsinformation einen tatsächlichen Lieferzeitpunkt und/oder eine tatsächliche Liefermenge der Ware. Die tatsächliche Liefermenge kann der geplanten Liefermenge (d.h. einer angekündigten Stückzahl oder Menge) entsprechen oder einer Teilmenge davon. Der tatsächliche Lieferzeitpunkt kann dem geplanten Lieferzeitpunkt entsprechen oder zeitlich davor oder danach liegen. Eine Abweichung ist, wie erläutert, durch ein oder mehrere Ereignisse bedingt, welche sich auf den Produktionsprozess beim Lieferanten und/oder die Lieferstrecke vom Lieferanten zum Betreiber des technischen Systems auswirken kann.

Es ist zweckmäßig, bei einem komplexen Liefernetzwerk, für jeden Lieferanten einer Mehrzahl von Lieferanten ein jeweiliges datengetriebenes Modell zu erzeugen. Hierdurch können, abhängig von dem/der von einem jeweiligen Lieferanten erzeugten Gut/Ware individuelle Einflüsse von Ereignissen berücksichtigt werden. Während sich bei einem Lieferanten beispielsweise die Verfügbarkeit von Vorprodukten oder Rohstoffen auf die Ist-Bereitstellungsinformation auswirken kann, kann bei einem anderen Lieferanten die Lieferstrecke wesentlicher Grund für Abweichungen zwischen Soll-Bereitstellungsinformationen und Ist-Bereitstellungsinformationen sein.

Es ist weiterhin zweckmäßig, wenn die erwartete Bereitstellungsinformation über eine Benutzeroberfläche ausgegeben oder an eine Recheneinheit zur Erzeugung des Produktionsplans für das technische System ausgegeben wird. In der ersten Variante wird es einem Nutzer (z.B. einem Planer des Produktionsplans) ermöglicht, Abweichungen bei der Bereitstellung einer Ware/eines Guts von angekündigten Soll-Bereitstellungsinformationen wahrzunehmen und das technische System in entsprechender Weise zu steuern oder anders zu konfigurieren. In der alternativen Variante kann die ermittelte erwartete Bereitstellungsinformation automatisiert dazu verarbeitet werden, den Produktionsplan zu simulieren, zu modifizieren und die entsprechenden Komponenten des technischen Systems in geeigneter Weise zu programmieren, um einen effizienten Ablauf des technischen Systems sicherzustellen.

Eine weitere zweckmäßige Ausgestaltung sieht vor, dass aus dem Produktionsplan Steuerbefehle für das technische System erzeugt werden, so dass die zumindest eine steuerbare Produktionseinheit und/oder die zumindest eine steuerbare Logistikeinheit in Bezug auf eine Abfolge von Produktionsschritten und/oder Logistikaufträgen gesteuert wird.

Gemäß einem zweiten Aspekt der vorliegenden Erfindung wird eine Vorrichtung zur rechnergestützten Erzeugung eines datengetriebenen Modells für die rechnergestützte Verarbeitung digitaler Daten eines Materialflusssystems für die zeitliche und/oder quantitative Steuerung eines technischen Systems mittels eines Produktionsplans vorgeschlagen, wobei das technische System zumindest eine steuerbare Produktionseinheit und/oder zumindest eine steuerbare Logistikeinheit umfasst, wobei zur Erzeugung des Produktionsplans von zumindest einem Lieferanten eines direkten Lieferantennetzwerks Bereitstellungsinformationen verarbeitet werden, die zumindest einen Soll-Lieferzeitpunkt umfassen. Die Vorrichtung umfasst einen Prozessor, der konfiguriert ist, das Verfahren gemäß einem oder mehreren Ausführungsformen der vorliegenden Erfindung durchzuführen.

Gemäß einem dritten Aspekt wird ein technisches System vorgeschlagen, das zumindest eine steuerbare Produktionseinheit und/oder zumindest eine steuerbare Logistikeinheit umfasst, wobei dieses eine erfindungsgemäße Vorrichtung zur Durchführung eines Verfahrens gemäß einem oder mehrerer Ausgestaltungsvarianten umfasst.

Schließlich wird gemäß einem vierten Aspekt der vorliegenden Erfindung ein Computerprogrammprodukt mit Programmcode vorgeschlagen, der auf einem nicht-flüchtigen maschinenlesbaren Träger gespeichert ist, zur Durchführung eines Verfahrens gemäß einem oder mehrerer Ausgestaltungsvarianten der Erfindung, wenn der Programmcode auf einem Computer ausgeführt wird.

Die Erfindung wird nachfolgend unter Bezugnahme auf ein Ausführungsbeispiel in der Zeichnung näher beschrieben. Es zeigen:
- Fig. 1: eine schematische Darstellung eines Lieferantennetzwerks und der zwischen den Partnern ausgetauschten Daten;
- Fig. 2: eine schematische Darstellung einer erfindungsgemäßen Vorrichtung zur rechnergestützten Erzeugung eines datengetriebenen Modells für die rechnergestützte Verarbeitung digitaler Daten des Materialflusssystems; und
- Fig. 3: eine Ablaufplan, der die einzelnen Schritte des erfindungsgemäßen Verfahrens illustriert.

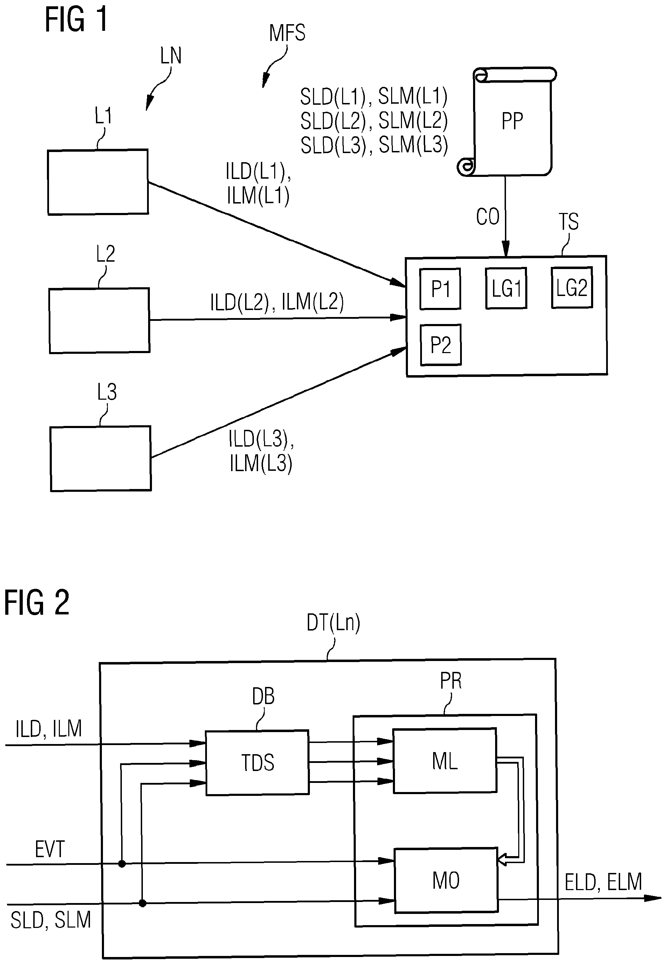

Fig. 1 zeigt in schematischer Darstellung eine erfindungsgemäße Vorrichtung zur Verarbeitung digitaler Daten eines Materialflusssystems MFS für die zeitliche und/oder quantitative Steuerung eines technischen Systems TS mittels eines Produktionsplans PP. Das Materialflusssystem MFS umfasst ein Lieferantennetzwerk LN, das im vorliegenden Ausführungsbeispiel drei Lieferanten L1, L2, L3 umfasst. Für die vorliegende Erfindung sind lediglich die für den Betreiber des technischen Systems TS beteiligen direkten Lieferanten L1, L2, L3 von Bedeutung, obwohl das Materialflusssystem im Gesamten aus einer beliebigen Anzahl von weiteren Vorlieferanten, die die Lieferanten L1, L2, L3 beliefern, besteht oder bestehen kann.

Das technische System TS umfasst in dem hier gezeigten Ausführungsbeispiel zwei Produktionseinheiten P1, P2 und zwei steuerbare Logistikeinheiten LG1, LG2, wobei die Anzahl in der Praxis auch anders gewählt sein kann. Das technische System TS könnte auch ausschließlich aus steuerbaren Produktionseinheiten oder ausschließlich aus steuerbaren Logistikeinheiten bestehen. Ebenso kann die Anzahl an steuerbaren Produktionseinheiten und/oder steuerbaren Logistikeinheiten beliebig gewählt sein.

Die steuerbaren Produktionseinheiten dienen dazu, ein von einem der Lieferanten L1, L2, L3 geliefertes Vorprodukt (Halbzweig, Stückgut, Rohstoff) weiter zu verarbeiten. Die Weiterverarbeitung kann eine mechanische Bearbeitung, eine elektrische Bearbeitung, eine chemische Bearbeitung oder ein Zusammensetzen verschiedener Vorprodukte umfassen. Auch Kombinationen der genannten Arbeitsschritte sind möglich.

Die Logistikeinheiten LG1, LG2 stellen beispielsweise ein automatisiertes Hochregallager und automatisierte Transportroboter, welche zu einem bestimmten Zeitpunkt Vorprodukte aus dem Hochregallager entnehmen und zu einer der Produktionsmaschinen P1, P2 bringen, dar.

Die Steuerung der verschiedenen Komponenten P1, P2, LG1, LG2 des technischen Systems TS erfolgt mit Hilfe eines Produktionsplans PP. Aus dem Produktionsplan PP können Steuerbefehle CO abgeleitet werden, wodurch die verschiedenen Komponenten P1, P2, LG1, LG2 zu einem bestimmten Zeitpunkt die erforderliche und angeforderte Arbeitsaufgabe durchführen.

Zur Erzeugung des Produktionsplans PP ist die genaue Kenntnis erforderlich, zu welchem Zeitpunkt und in welcher Menge die von den jeweiligen Lieferanten L1, L2, L3 gelieferten Vorprodukte beim Betreiber des technischen Systems eintreffen.

Zu diesem Zweck werden jeweils Bereitstellungsinformationen, welche einen Lieferzeitpunkt und/oder eine Liefermenge umfassen, verarbeitet. Während die Lieferanten L1, L2, L3 vor dem tatsächlichen Eintreffen der Vorprodukte ein Soll-Lieferdatum SLD und eine Soll-Liefermenge SLM ankündigen, ist für die Erstellung des Produktionsplans PP das tatsächliche Ist-Lieferzeitpunkt und die tatsächliche Ist-Liefermenge, welche von der Soll-Liefermenge abweichen können, von Bedeutung.

In Fig. 1 bezieht sich ein Soll-Lieferdatum SLD(L1) und eine Soll-Liefermenge SLM(L1) auf die von dem Lieferanten L1 bereitgestellten Bereitstellungsinformationen SLD und SLM. In entsprechender Weise ist die Notation für die Lieferanten L2 und L3 gewählt.

Um die Erzeugung des Produktionsplans PP zur zeitlichen und/oder quantitativen Steuerung des technischen Systems TS präziser und automatisiert vornehmen zu können, sieht die Erfindung die rechnergestützte Erzeugung eines datengetriebenen Modells MO vor (Fig. 2). Das datengetriebene Modell MO wird durch ein Maschinenlernverfahren ML erzeugt, dem ein Trainingsdatensatz TDS aus einer Datenbank DB bereitgestellt wird.

Der Trainingsdatensatz TDS umfasst für jeden Lieferanten L1, L2, L3 historische Daten für eine Vielzahl an Lieferungen der Vergangenheit. Für jede Lieferung ist zumindest eine Soll-Bereitstellungsinformation SLD (Lieferzeitpunkt) und SLM (Liefermenge), zumindest eine Ist-Bereitstellungsinformation ILD (tatsächlicher Lieferzeitpunkt) und ILM (tatsächliche Liefermenge), sowie zumindest eines Ereignis EVT, das eine Abweichung der Ist-Bereitstellungsinformation ILD, ILM von der Soll-Bereitstellungsinformation SLD, SLM bewirkt oder bewirken kann, vorhanden.

Als Ereignis EVT kommen grundsätzlich ein Wochentag der geplanten Lieferung, ein bestimmtes Kalenderereignis, wie z.B. ein Feiertag, Ferienzeit oder keine Ferienzeit, vorherrschende Wetterbedingungen zum Zeitpunkt der geplanten Lieferungen, ein Wetterereignis zum geplanten Zeitpunkt der Lieferungen, wie Regen, Flut, Sturm, Pandemieereignisse, oder bestimmte Verkehrssituationen, wie Zug- oder Flugausfälle oder Verzögerungen beim Schiffstransport, in Frage.

Der Trainingsdatensatz TDS, der die Vielzahl an Lieferungen der Vergangenheit umfasst, wird zum Trainieren eines Maschinenlernverfahrens ML verwendet. Das Maschinenlernverfahren ML läuft auf einem Prozessor PR ab. Das Maschinenlernverfahren ML, das das erzeugte datengetriebene Modell MO erzeugt bzw. repräsentiert, umfasst einen Eingang zum Einlesen zumindest einer in der Zukunft geplanten Soll-Bereitstellungsinformation SLD, SLM und zumindest eines Ereignisses EVT vor oder im Bereich des Soll-Lieferzeitpunktes. An einem Ausgang des Modells MO wird eine erwartete Bereitstellungsinformation ELD, ELM als die Bereitstellungsinformation ausgegeben, die zur Erzeugung des Produktionsplans PP verarbeitet wird. Dieses beschriebene Vorgehen kann Fig. 2 entnommen werden.

Die eben beschriebenen Komponenten stellen damit einen digitalen Zwilling DT eines Lieferanten Ln dar, wobei n für den Lieferanten 1 oder 2 oder 3 steht. Der digitale Zwilling DT ermöglicht die Bereitstellung eines datengetriebenen Modells MO, welches fehlende oder an Qualität mangelnde Daten eines Lieferanten Ln aus historischen Daten bestimmen kann. Das datengetriebene Modell MO ist anschließend in der Lage, eigenständig Vorhersagen zu aktuellen Warenflüssen zu treffen und dem Betreiber des technischen Systems bzw. den betriebenen Applikationen, wie Materialfluss, Simulation, Produktionsplanung PP und Auftragsmanagement, die erforderlichen Lieferdaten zur Verfügung zu stellen.

Wird für jeden Lieferanten L1, L2, L3 ein solcher digitaler Zwilling bereitgestellt, so ist die erfindungsgemäße Vorrichtung in der Lage, aus den digital bereitgestellten Daten des Materialflusssystems den Produktionsplan PP zu erzeugen, aus dem für die zeitliche und/oder qualitative Steuerung des technischen Systems TS und dessen Komponenten P1, P2, LG1, LG2 Steuerbefehle CO abgeleitet werden können. Durch dieses Vorgehen wird die Abhängigkeit von den Lieferanten L1, L2, L3, welche als Datenspender betrachtet werden können, reduziert oder eliminiert.

Um das automatisch erstellte datengetriebene Modell eines Lieferanten über die Lebensdauer der Lieferantenbeziehung aktuell zu halten, wird dieses in unregelmäßigen Abständen, z.B. manuell getriggert, aktualisiert.

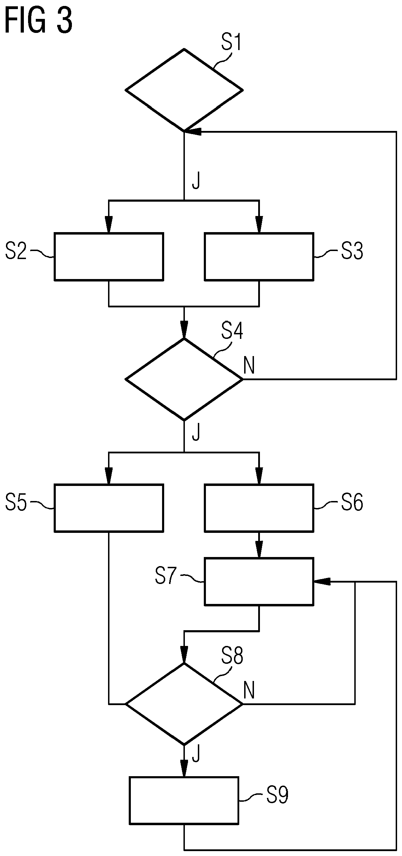

Fig. 3 zeigt einen Ablaufplan, mit dem die Implementierung des erfindungsgemäßen Verfahrens realisiert werden kann.

In einem Schritt S1 wird überprüft, ob ein Software-Agent, der den digitalen Zwilling DT repräsentiert, installiert ist. Ist dies der Fall (Pfad "J"), so erfolgt in Schritt S2 die Sammlung von externen Ereignisdaten (Ereignissen EVT), wie z.B. Kalenderinformationen oder Wetterinformationen. In einem Schritt S3 erfolgt parallel die Sammlung lokaler Lieferdaten aus der Datenbank DB. In Schritt S4 wird überprüft, ob ausreichend Daten für die Erzeugung des datengetriebenen Modells MO vorhanden sind. Ist dies nicht der Fall (Pfad "N"), so kehrt das Verfahren zum Ausgang von Schritt S1 zurück. Sind ausreichend Daten vorhanden (Pfad "J"), so wird durch den digitalen Zwilling DT im Hintergrund laufend die Datenbank DB aktualisiert (Schritt S5). Parallel wird in Schritt S6 mit Hilfe eines Maschinenlernverfahrens ML das datengetriebene Modell MO aus Soll- und Ist-Bereitstellungsinformationen sowie den Ereignisdaten EVT erzeugt. Der digitale Zwilling DT gibt in Schritt S7 fortlaufend Vorhersagen für den erwarteten Liefertermin und eine erwartete Liefermenge (erwartete Bereitstellungsinformationen ELD, ELM). In Schritt S8 wird überprüft, ob die Differenz zwischen den Ist-Bereitstellungsinformationen und den erwarteten Bereitstellungsinformationen zu groß ist. Ist dies nicht der Fall (Pfad "N"), so kehrt das Verfahren zu Schritt S7 zurück. Ist die Differenz zu groß (Pfad "J"), so erfolgt in Schritt S9 mit Hilfe des Maschinenlernverfahrens und weiter gesammelten Lieferantendaten eine Aktualisierung des datengetriebenen Modells MO.

Das beschriebene Verfahren ermöglicht im Fall von fehlenden Lieferantendaten die Generierung von hypothetischen Daten. Dies ist beispielsweise der Fall, wenn ein Lieferant lediglich ein voraussichtliches Lieferdatum mitteilt. Insbesondere in einem modernen technischen System benötigen die Anwendungen jedoch vollständige Daten, um Berechnungen durchführen zu können. Dieses Problem kann durch die Erfindung eliminiert werden.

Ferner ermöglicht das beschriebene Verfahren eine präzisere und stabilere Erstellung von Produktionsplänen PP. Dies wird durch das datengetriebene Modell aus historischen Daten und den bekannten angekündigten Bereitstellungsinformationen ermöglicht. Hierdurch ist einerseits eine Qualitätskontrolle und andererseits eine Einschätzung der Lieferantentreue in der Zukunft möglich.

Das Verfahren kann ferner zur Abschätzung einer Lieferantenflexibilität eingesetzt werden. Insbesondere ist die Vorhersage über Lieferantenreaktionen möglich, ohne diese zu veröffentlichen.

Das Verfahren eignet sich zudem zur Erstellung verschiedener Best Case- oder Worst Case-Varianten. Auch dies ermöglicht die Erstellung stabiler Produktionspläne PP, da verschiedene Varianten berücksichtigt werden können.

Unabhängig vom grammatikalischen Geschlecht eines bestimmten Begriffes sind Personen mit männlicher, weiblicher oder anderer Geschlechteridentität mit umfasst.

### Bezugszeichenliste

- TS: technisches System
- P1, P2: Produktionseinheit
- LG1, LG2: Logistikeinheit
- CO: Steuerbefehl
- PP: Produktionsplan
- LN: Lieferantennetzwerk
- L1, L2, L3: Lieferant (allgemein: Ln mit n=1 ... 3)
- ILD, ILM: Ist-Bereitstellungsinformation
- SLD, SLM: Soll- Bereitstellungsinformation
- ELD, ELM: erwartete Bereitstellungsinformation
- EVT: Ereignis
- DB: Datenbank
- TDS: Trainingsdatensatz
- DT(Ln): digitaler Zwilling des Lieferanten Ln
- ML: Maschinenlernverfahren
- MO: datengetriebenes Modell
- S1...S9: Verfahrensschritt

## Patentansprüche

1. Verfahren zur rechnergestützten Erzeugung eines datengetriebenen Modells (MO) für die rechnergestützte Verarbeitung digitaler Daten eines Materialflusssystems (MFS) für die zeitliche und/oder quantitative Steuerung eines technischen Systems (TS) mittels eines Produktionsplans (PP), wobei das technische System (TS) zumindest eine steuerbare Produktionseinheit (P1, P2) und/oder zumindest eine steuerbare Logistikeinheit (LG1, LG2) umfasst, und wobei zur Erzeugung des Produktionsplans (PP) von zumindest einem Lieferanten (L1, L2, L3) eines direkten Lieferantennetzwerks (LN) Bereitstellungsinformationen verarbeitet werden, die zumindest einen Soll-Lieferzeitpunkt umfassen, wobei die Erzeugung des datengetriebenen Modells die folgenden Schritte umfasst:
i) Bereitstellen eines Trainingsdatensatzes (TDS), der für eine Vielzahl an Lieferungen der Vergangenheit jeweils zumindest eine Soll-Bereitstellungsinformation (SLD, SLM), zumindest eine Ist-Bereitstellungsinformation (ILD, ILM) und zumindest ein Ereignis (EVT), das eine Abweichung der Ist-Bereitstellungsinformation (ILD, ILM) von der Soll-Bereitstellungsinformationen (SLD, SLM) bewirkt oder bewirken kann, umfasst;
ii) Trainieren eines Maschinenlernverfahrens (ML) mit dem Trainingsdatensatz (TDS), wobei das Maschinenlernverfahren (ML) einen Eingang zum Einlesen zumindest einer in der Zukunft geplanten Soll-Bereitstellungsinformation (SLD, SLM) und zumindest eines Ereignisses (EVT) vor oder im Bereich des Soll-Lieferzeitpunkts umfasst, und einen Ausgang zum Ausgeben erwarteter Bereitstellungsinformationen (ELD, ELM) als die Bereitstellungsinformationen umfasst, wobei das trainierte Maschinenlernverfahren (ML) das erzeugte datengetriebene Modell (MO) darstellt.

2. Verfahren nach Anspruch 1, wobei die Soll-Bereitstellungsinformationen (SLD, SLM) einen geplanten Lieferzeitpunkt und/oder eine geplante Liefermenge einer Ware umfasst.

3. Verfahren nach Anspruch 1 oder 2, wobei die Ist-Bereitstellungsinformation (ILD, ILM) einen tatsächlichen Lieferzeitpunkt und/oder eine tatsächliche Liefermenge einer Ware umfasst.

4. Verfahren nach einem der vorhergehenden Ansprüche, wobei das trainierte datengesteuerte Modell (MO) auf einem Offline-Lernverfahren oder Semi Supervised Offline Learning-Methoden basiert.

5. Verfahren nach einem der vorhergehenden Ansprüche, wobei für jeden Lieferanten (L1, L2, L3) einer Mehrzahl von Lieferanten (L1, L2, L3) ein jeweiliges datengetriebenes Modell (MO) erzeugt wird.

6. Verfahren nach einem der vorhergehenden Ansprüche, wobei die erwartete Bereitstellungsinformation (ELD, ELM) über eine Benutzeroberfläche ausgegeben oder an eine Recheneinheit zur Erzeugung des Produktionsplans (PP) für das technische System (TS) ausgegeben wird.

7. Verfahren nach Anspruch 6, wobei aus dem Produktionsplan (PP) Steuerbefehle (CO) für das technische System (TS) erzeugt werden, so dass die zumindest eine steuerbare Produktionseinheit (P1, P2) und/oder zumindest eine steuerbare Logistikeinheit (LG1, LG2) in Bezug auf eine Abfolge von Produktionsschritten und oder Logistikaufträgen gesteuert wird.

8. Vorrichtung zur rechnergestützten Erzeugung eines datengetriebenen Modells (MO) für die rechnergestützte Verarbeitung digitaler Daten eines Materialflusssystems (MFS) für die zeitliche und/oder quantitative Steuerung eines technischen Systems (TS) mittels eines Produktionsplans (PP), wobei das technische System (TS) zumindest eine steuerbare Produktionseinheit (P1, P2) und/oder zumindest eine steuerbare Logistikeinheit (LG1, LG2) umfasst, und wobei zur Erzeugung des Produktionsplans (PP) von zumindest einem Lieferanten (L1, L2, L3) eines direkten Lieferantennetzwerks (LN) Bereitstellungsinformationen verarbeitet werden, die zumindest einen Soll-Lieferzeitpunkt umfassen, wobei die Vorrichtung (4) einen Prozessor (PR) umfasst, der so konfiguriert ist, dass er die folgenden Schritte durchführt:
i) Verarbeiten eines Trainingsdatensatzes (TDS), der für eine Vielzahl an Lieferungen der Vergangenheit jeweils zumindest eine Soll-Bereitstellungsinformation (SLD, SLM), zumindest eine Ist-Bereitstellungsinformation (ILD, ILM) und zumindest ein Ereignis (EVT), das eine Abweichung der Ist-Bereitstellungsinformation (ILD, ILM) von der Soll-Bereitstellungsinformationen (SLD, SLM) bewirkt, umfasst;
ii) Trainieren eines Maschinenlernverfahrens (ML) mit dem Trainingsdatensatz (TDS), wobei das Maschinenlernverfahren (ML) einen Eingang zum Einlesen zumindest einer in der Zukunft geplanten Soll-Bereitstellungsinformation (SLD, SLM) und zumindest eines Ereignisses (EVT) vor oder im Bereich des Soll-Lieferzeitpunkts umfasst, und einen Ausgang zum Ausgeben erwarteter Bereitstellungsinformationen (ELD, ELM) als die Bereitstellungsinformationen umfasst, wobei das trainierte Maschinenlernverfahren (ML) das erzeugte datengetriebene Modell (MO) darstellt.

9. Vorrichtung nach Anspruch 8, wobei die Vorrichtung zur Durchführung eines Verfahrens nach einem der Ansprüche 2 bis 7 konfiguriert ist.

10. Technisches System (TS), das zumindest eine steuerbare Produktionseinheit (P1, P2) und/oder zumindest eine steuerbare Logistikeinheit (LG1, LG2) umfasst, wobei dieses eine Vorrichtung zur Durchführung eines Verfahrens nach einem der Ansprüche 2 bis 7 umfasst.

11. Computerprogrammprodukt mit Programmcode, der auf einem nicht-flüchtigen maschinenlesbaren Träger gespeichert ist, zur Durchführung eines Verfahrens nach einem der Ansprüche 1 bis 7, wenn der Programmcode auf einem Computer ausgeführt wird.
